# EUROPEAN PATENT SPECIFICATION

(11) **EP 1 568 254 B1**
(45) Date of publication and mention of the grant of the patent: **20.02.2008**
(21) Application number: 03773573.5
(22) Date of filing: 18.11.2003
(51) Int. Cl.: H05B 33/02, F21V 9/08, F21V 19/00, F21V 9/00

(54) **LIGHTING BODY OR SOURCE OF LIGHT BASED ON LIGHT-EMITTING DIODES**
LICHTKÖRPER ODER LICHTQUELLE AUF DER GRUNDLAGE VON LEUCHTDIODEN
CORPS LUMINEUX OU SOURCE DE LUMIERE A BASE DE DIODES ELECTROLUMINESCENTES

(30) Priority: 19.11.2002 DK 200201773
(43) Date of publication of application: 31.08.2005
(73) Proprietor: Friis, Dan, 3650 Olstykke (DK)
(72) Inventor: Friis, Dan, 3650 Olstykke (DK)
(74) Representative: van Walstijn, Bartholomeus G. G.
(86) International application number: PCT/DK2003/000786
(87) International publication number: WO 2004/047498

(56) References cited:
- WO-A-01/60119
- GB-A- 186 038
- GB-A- 2 239 306
- US-A- 3 845 351
- US-A- 5 850 126
- US-A- 5 921 660
- US-B1- 6 474 837

## Description

### FIELD OF THE INVENTION

The present invention relates to a lighting body or a source of light having a number of light-emitting diodes, and in particular to a lighting body comprising both a lighting part with light-emitting diodes and a power part for supplying a direct current to the light-emitting diodes. The present invention further relates to a lighting body comprising a lighting part with light-emitting diodes and a mechanical colour shade regulator.

### BACKGROUND OF THE INVENTION

Today, there already are a number of patents dealing with generation of light by use of light-emitting diodes. The following patents deal with this subject:
WO018265
US20020070688
US20020048169
US6450661
JP2002158376
GB2361581
US2002057567
JP2001325809
AU5913401
WO0182657
US6292901
WO0136864

The above-mentioned patents deal with either colouring by use of a computer, control of a network of light sources, control of one or more light-emitting diodes or computer- or contact-controlled functions on the lamp. It is only US2002057567 that deals with the production of a spotlight lamp. The present invention is based on another method than the method described in US2002057567.

None of the above-mentioned patents have taken into account the arrangement of the light-emitting diodes in rotation to the generated light. Likewise, the total energy consumption of both the light-emitting diodes and the power supply or the change in the colour of the light-emitting diodes resulting from both the effect of heat and the ageing of the light-emitting diodes have not been taken into account.

Document US 5 850 126 shows a light source with a number of LEDs and a power converter for converting AC to DC current.

Document GB 2 239 306 discloses a LED light source with two groups of serially connected LEDs.

### SUMMARY OF THE INVENTION

According to a first aspect of the present invention there is provided a lighting body or a source of light comprising:
a lighting part with a number of light-emitting diodes (LEDs), and
a power part with a power converter for converting an incoming AC or DC current to a direct current for supply of the LEDs, said power converter having first and second outputs for the supply of the LEDs.

According to a first preferred embodiment of the invention, the power part comprises an AC to DC converter for converting a high-voltage AC current into a direct current for supply of the LEDs, wherein said AC to DC converter comprises a reactance divider. Here, the AC to DC converter may comprise first and second AC-supply terminals and a non-isolated capacitor fed diode rectifier with a first capacitor being coupled between the first AC terminal and a first diode rectifier input and with a second input of the diode rectifier being supplied from the second AC terminal. Preferably, the diode rectifier is a full wave bridge rectifier, and the diode rectifier may have first and second diode rectifier outputs with a second capacitor being coupled between said first and second diode rectifier outputs. It is preferred that the value of the first capacitor is in the range 100nF to 1 µF.

The outputs of the AC to DC converter may be the first and second diode rectifier outputs. It is preferred that a so-called "bleed" resistor is connected across the first and second AC-supply terminals. Here, the value of the bleed resistor may be chosen so that the first capacitor when fully charged may be discharged within 1 second.

According to a second preferred embodiment of the invention, the power part comprises a DC to DC converter for converting a low-voltage DC input current into a direct current for supply of the LEDs, wherein said DC to DC converter comprises a step-up converter or a boost converter.

The first aspect of the present invention also covers embodiments wherein a current controlling or limiting circuit is inserted between a number of serially connected LEDs and one of the outputs of the power converter.

For a preferred embodiment of the first aspect of the invention, a first number of LEDs are serially connected in a first diode string being supplied from the outputs of the power converter. Here, the power converter may be an AC to DC converter and a first current controlling or limiting circuit may be inserted in series between the first diode string and one of the outputs of the AC to DC converter. It is further preferred that a second number of LEDs are serially connected in a second diode string being supplied from the outputs of the power converter in parallel with the first diode string. Also here, when the power converter is an AC to DC converter, a second current controlling or limiting circuit may be inserted in series between the second diode string and one of the outputs of the AC to DC converter. It is even further preferred that a third number of LEDs are serially connected in a third diode string being supplied from the outputs of the power converter in parallel with the first and second diode strings. Again, when the power converter is an AC to DC converter, a third current controlling or limiting circuit may be inserted in series between the third diode string and one of the outputs of the AC to DC converter.

According to a preferred embodiment of the invention having one or more diode strings, then for each diode string, the light-emitting diodes of similar colour may be serially connected to each other in a colour string. Here, the lighting part may comprise light-emitting diodes of two different colours with said light-emitting diodes being arranged in at least two corresponding Colour strings. Thus, when a diode string comprises light-emitting diodes of two different colours, said different coloured light-emitting diodes may be arranged in two corresponding colour strings.

For an embodiment of the invention having one or more diode strings, it is also within a preferred embodiment that the lighting part comprises light-emitting diodes of three different colours, said different coloured light-emitting diodes being arranged in at least three corresponding colour strings. Thus, when a diode string comprises light-emitting diodes of three different colours, said different coloured light-emitting diodes may be arranged in three corresponding colour strings.

For embodiments of the invention having colour strings, it is preferred that a temperature compensating circuit is connected to a corresponding colour string for controlling the current in the colour string as a function of diode temperature. Here, each colour string may be connected to a corresponding temperature compensating circuit for controlling the current in the colour string as a function of diode temperature. Preferably, each temperature compensating circuit is adapted to reduce the current in the diodes of the corresponding colour string for increasing diode temperatures. It is preferred that for each temperature compensating circuit, a temperature sensitive element is arranged below a light-emitting diode of the corresponding diode or colour string.

In should be understood that according to the present invention the power part may be an integral part of the lighting body or source of light.

It is preferred that the light emitting diodes are arranged on a substantially plane LED printed circuit board, whereby the lighting part comprises the LED printed circuit board, and the power part is arranged on a power supply printed circuit board being placed below the LED printed circuit board.

It is also preferred that the lighting body or source of light further comprises a socket with socket connections being connected to voltage inputs of the power converter. Here, the socket may be an Edison screw socket.

It is also within an embodiment of the first aspect of the invention that the lighting body or source of light further comprises a mechanical colour shade regulator.

According to a second aspect of the present invention, there is provided a lighting body or a source of light comprising:
a lighting part with a number of light-emitting diodes (LEDs), and
a mechanical colour shade regulator.

For a preferred embodiment of the second aspect of the invention the light emitting diodes are arranged on a substantially plane LED printed circuit board.

For embodiments of the present invention having a mechanical colour shade regulator, the mechanical colour shade regulator may comprise a single regulating plate, with the regulating plate being arranged so that it can rotate or slide between two or more positions to thereby cover different parts of the LEDs. It is also within an embodiment of the invention that the mechanical colour shade regulator comprises two, three or more regulating plates arranged below each other, with the regulating plates being arranged so that they can rotate or slide independently of each other between two or more positions, to thereby cover different parts of the LEDs. It is preferred that the regulating plate(s) is/are arranged substantial parallel to the LED printed circuit board.

It is also preferred that one or more of the regulating plates of the mechanical colour shade regulator is/are made of a transparent material being covered on the outer side by a raster or screen. Here the regulating plate may be made of a glass material or a plastic material. According to a preferred embodiment, the outer side of the regulating plate is covered by a raster or screen having the form of a lattice pattern or a dot pattern. It should be understood that the area of the light-emitting diodes being covered by the raster of a regulating plate may be varied by rotating or sliding the regulating plate. According to an embodiment of the invention having a mechanical colour shade regulator then when the regulating plate is in a first position, the light-emitting diodes may be affected by a raster of 0% or in the range of 0-5%, and when the regulating plate is in a second position the light-emitting diodes may be affected by a raster in the range of 5-20%, such as about 10%.

For embodiments of the invention having a mechanical colour shade regulator it is within a preferred embodiment that the lighting part comprises light-emitting diodes of a first and a second colour, and the mechanical colour shade regulator comprises a first and a second regulating plate, said regulating plates being arranged so that the first plate can rotate or slide to thereby have its raster at least partly covering the light-emitting diodes of the first colour, and so that the second plate can rotate or slide to thereby have its raster at least partly covering the light-emitting diodes of the second colour. Here, the lighting part may further comprise light-emitting diodes of a third colour, and the mechanical colour shade regulator may further comprise a third regulating plate, said third regulating plate being arranged so that it can rotate or slide to thereby have its raster at least partly covering the light-emitting diodes of the third colour.

The aspects of the present invention also covers embodiments wherein the lighting part comprises light-emitting diodes of at least two colours. Hereby it may be possible to obtain a coloured light.

It is also within embodiments of the aspects of the present invention that the lighting part comprises light-emitting diodes of at least three colours. Here, the light-emitting diodes may comprise red, green and blue light-emitting diodes. The red, green and blue light-emitting diodes may be arranged so as to obtain white light. Here it is preferred that the light-emitting diodes having the same colour are not placed next to each other.

The red, green and blue light-emitting diodes may also be arranged so as to obtain coloured light. Here, at least some light-emitting diodes having the same colour may be placed next to each other.

The aspects of the present invention also covers embodiments wherein the light-emitting diodes of the lighting part are placed or arranged in concentric circles or in polygons. Here, the concentric circles or polygons may be arranged having their centre in the centre of the light source.

The lighting body or source of light according to embodiments of the present invention may be cast into a watertight and/or heat-resistant material. Here, the casting material may be heat-conducting so that the heat is conducted away from the light-emitting diodes.

According to an embodiment of the present invention, the lighting part or the light-emitting diodes may be arranged in a non-conducting liquid bath for conducting away the heat from the light-emitting diodes.

The aspects of the present invention may cover embodiments of a source of light comprising:
a number of light-emitting diodes, a power supply and a mechanical colour shade regulator. It is within an embodiment that the light-emitting diodes may include at least three coloured light-emitting diodes, red, green and blue, for providing white light. Alternatively, the light-emitting diodes may include at least three coloured light-emitting diodes, red, green and blue, for providing coloured light. It is also within an embodiment:that the light-emitting diodes include at least two coloured light-emitting diodes for providing coloured light. The light-emitting diodes may be assembled in one or more strings. Each string being made up of series connected light-emitting diodes, and each of the strings may be current controlled by a constant or variable current. Each string may be connected to a temperature compensating circuit. This circuit may consist of a temperature sensitive resistor for controlling the current in the strings of light-emitting diodes. The temperature controlling circuit may also consist of a temperature sensor for controlling the current in the strings of the light-emitting diodes.

According to one or more embodiments of the light source of the present invention, the power supply for the light-emitting diodes may be built together with the light source so that the light source appears as a single unit. In this embodiment the light source may replace existing halogen spotlight lamps. The light source may be formed as any two-dimensional symmetrical figure, such as for example a circle, a star, a circular disc or the like. The light source may in addition to this be formed as any two-dimensional asymmetrical figure, such as for example an animal, an amoebic form or the like. The light-emitting diodes of the light source of the invention may be placed or arranged in concentric circles or in polygons. The concentric circles or polygons may be arranged having their centre in the centre of the light source. The concentric circles or polygons may in addition to this be arranged as smaller units or in an embodiment of the light source, which is not symmetrical formed.

The light source of the present invention may be cast into a watertight and/or heat-resistant material, which may be washed in a normal automatic dishwasher or sterilized by use of an apparatus adapted for that purpose. Here, the casting material may be heat-conducting so that the heat is conducted away from the light-emitting diodes. It is also within an embodiment that the light-emitting diodes are arranged in a non-conducting liquid bath for conducting away the heat from the light-emitting diodes. In this embodiment the outer side of the light source may be smooth or provided with cooling fins.

For the light source of the present invention a reflective layer may be arranged beneath the light-emitting diodes for collecting the amount of light being emitted to the rear by the light-emitting diodes. The reflective layer may be formed so that the light emitted to the rear is reflected forwards in the same direction as the light being emitted forwards by the light-emitting diodes. This way, the reflected light will increase the efficiency of the light emission of the light source.

For the light source of the present invention having a mechanical colour shade regulator, the mechanical colour shade regulator may formed as a circular disc or another plate or sheet of a transparent material as for example glass, plexiglass or the like. The regulator is furthermore on the outer side covered by a raster or screen, which may have the form of for example a lattice pattern or a dot pattern. Here, the raster or screen pattern may be formed as a sliding raster or screen from 0-100%. The raster or screen may also be formed as a fixed raster or screen by which should be understood that in a first position the light source may be affected by a raster of 0% and in a second position the light source may be affected by a raster of for example 10%. The mechanical colour shade regulator may be formed as a sliding plate comprising several regulators, which may depend on each other or be independent of each other. Thus, mechanical regulation of the light/shade of light may be performed by use of one or more rotateable/slideable plate/plates with fixed damper/raster or screen.

The light source of the present invention also covers embodiments in which the power supply for the light-emitting diodes are partly built together with the light source so that the light source appears as a single unit. But wherein the common supply unit is constructed in order to reduce the loss in the total power supply. This embodiment of the light source may replace existing halogen systems.

The present invention also covers embodiments in which a reflective layer is arranged beneath the light-emitting diodes for reflecting forwards light being emitted to the rear by the light-emitting diodes.

The present invention also covers embodiments in which the lighting body or source of light of the invention further comprises one or more optical lenses for focusing the light emitted from the light-emitting diodes.

It is also within the present invention that a reflector or a shield is arranged along the edge of the lighting part of the lighting body or source of light. Here, the edge reflector or shield may be arranged so as to form a shield for the outer edge of the field of emitted light.

Light-emitting diodes are used in a countless number of different applications of which the most widespread use is as an indicator on different apparatuses. During recent years light-emitting diodes have also been used especially as stoplight for cars, traffic light and for railway signalling. Add to this an increasing use in different applications concerning signalling.

So far, light-emitting diodes have not been used as a light source for lighting of homes, institutions, hospitals etc.. Light-emitting diodes can now be produced at a price and at a quality making it possible to use them as an alternative to traditional lighting.

The use of light-emitting diodes as a light source further has the advantage that they consume a considerable smaller amount of electrical energy than existing lamps. However, it should be remembered to take into account the loss of power in the used power supply, as the gain in energy may be lost due to a poor power supply. The price of electrical energy is increasing and at present there are no applicable alternatives to fossil/nuclear produced electrical energy, which alternatives may bring down the price. Thus energy saving light sources are of interest for the society as a whole and for the individual consumer in particular.

Light sources produced by use of light-emitting diodes for which the generated light can be regulated in colour may be used within all the areas in which spotlight lamps are used today. Furthermore, regulating of colour or shade of colour is taking part in bringing out or providing a desired ambience.

In shops with illumination of a display of a product line, the light sources used today deliver a great amount of heat causing inconvenience for the personnel and the displayed articles. By use of the herein described light source this problem may be eliminated, as the light-emitting diodes do not deliver heat to a noticeable degree. This may also be used within areas such as:
Dentists, where the presently used lamps deliver heat to the neck of the dentist.
Hospitals, where the big lamps at the operating tables deliver heat, causing inconvenience for the surgical doctor, who may perspire unnecessary.
Theatres, where the presently used projectors heat the scene to an unpleasant high temperature.
Food/fresh-food, where the heat reduces the shelf-life of the products.

The long lifetime of the light-emitting diodes means that the light source will have a long lifetime. This makes the light source especially suited for places being difficult to access. Furthermore, the long lifetime of the light source may be used when there is a demand/whish for continuous light during most of the day and night or the whole day and night.

The light-emitting diodes, which are presently available, can be used for producing a spotlight lamp having the same dimensions as existing halogen spotlights, and can generate the same amount of light as a 20 Watt halogen spotlight by using only 3 Watt.

According to the present embodiment, the power supply may be built together with the light-emitting diodes so that the power supply and the light-emitting diodes together form the spotlight unit. This unitmay be inserted straight away into the same socket as the existing halogen spotlight without replacement of the existing power supply. The above-mentioned patents prescribe replacement of socket, power supply, new external power supply and/or set-up of a totally new network for the lamps.

The linkage of light-emitting diodes and power supply may also provide a certainty that the total power consumption is held within the prescribed limits so that the announced energy saving is a real saving, which is not consumed by a poor power supply.

Light-emitting diodes are constantly improved and within the next couple of years, light-emitting diodes, which will make it possible to generate an amount of light corresponding to a 35 Watt halogen spotlight lamp, will be available. Here, it should be noted that reference is made to the presently existing halogen spotlight lamps. The halogen lamps are also improved on a continuous basis and the first improved halogen spotlight lamps are arrived at the market.

The output of light from the light-emitting diodes are improved on a continuous basis, which as time goes by will make it possible to produce spotlight lamps having light-emitting diodes, which lamps can replace all presently known spotlight lamps.

From the above discussion, it should be understood that embodiments of the present invention may provide a source of light for which the supplied or generated light can be regulated in colour as well as in the shade of the single colour or tint. Embodiments of the present invention may also provide a source of light, which almost does not supply heat. Embodiments of the present invention may provide a source of light, which is energy saving and may replace existing spotlight lamps.

The source of light of the present invention may be intended for use in applications for which spotlight lamps are used today. Add to this a number of new applications such as a reading lamp for visually handicapped etc..

Other objects, features and advantages of the present invention will be more readily apparent from the detailed description of the preferred embodiments set forth below, taken in conjunction with the accompanying drawings.

### BRIEF DESCRIPTION OF THE DRAWINGS

Fig. 1 shows a lighting body or source of light according to an embodiment of the present invention,
Fig. 2 shows the arrangement of light-emitting diodes in a lighting body or source of light according to an embodiment of the present invention,
Figs. 3a, 3b, 3c illustrates alternatives of arrangements of light emitting diodes according to embodiments of the present invention,
Figs. 4a, 4b are block diagrams showing the arrangement of components of two lighting bodies or sources of light according to the invention having an AC to DC power supply,
Fig. 5 is a detailed diagram showing the components of the block diagram of Fig. 4a,
Figs. 6a and 6b are block diagrams showing the arrangement of components of two lighting bodies or sources of light according to the invention having a DC to DC power supply,
Fig. 7 is a detailed diagram showing the components of a DC to DC power supply to be used in an embodiment of the lighting bodies of Fig. 6a and 6b,
Figs. 8a, 8b, 8c illustrates mechanical colour shade regulators according to embodiments of the present invention,
Fig. 9 shows the arrangement of a reflector or a reflective layer in a lighting body or source of light according to an embodiment of the present invention,
Fig. 10 shows the arrangement of a colour shade regulator and a conventional lens on a lighting body or source of light according to an embodiment of the present invention, and
Fig. 11 shows the arrangement of a colour shade regulator and a holographic lens on a lighting body or source of light according to an embodiment of the present invention.

### DESCRIPTION OF PREFERRED EMBODIMENTS

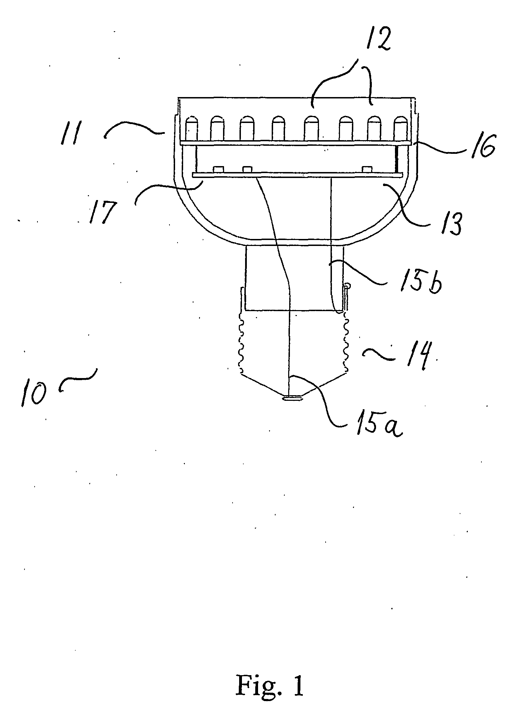

Fig. 1 shows a lighting body or source of light 10 according to an embodiment of the present invention. The lighting body 10 has a lighting part 11 with a number of light-emitting diodes, LEDs, 12, and a power part 13 with a power converter for converting an incoming AC or DC current to a direct current for supply of the LEDs 12. The lighting body has a socket, which may be an Edison screw socket type E14, with socket connections 15a, 15b for connecting the socket 14 to inputs of the power converter. The light-emitting diodes 12 are arranged on a plane LED printed circuit board 16, and the components of the power part 13 are arranged on a power supply printed circuit board 17 placed below the LED circuit board 16.

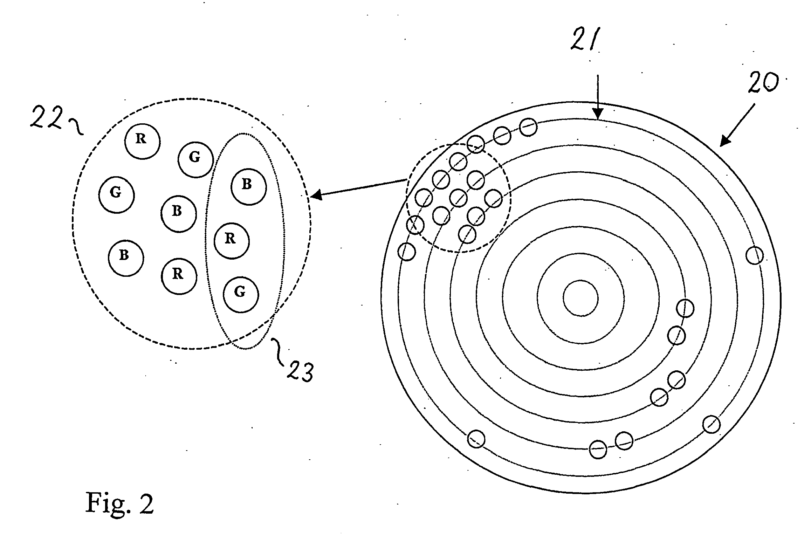

Fig. 2 shows the arrangement of light-emitting diodes in a lighting body or source of light 20 according to an embodiment of the present invention. Here, light-emitting diodes of 3 colours are used, red, green and blue. According to a preferred embodiment the light-emitting diodes are arranged in concentric circles 21, in which light-emitting diodes having the same colour do not appear next to each other. Likewise, light-emitting diodes having the same colour do not appear facing each other in each of the concentric circles, segment 22 and sub segment 23. In segment 22 the red, green and blue diodes are denoted R, G and B, respectively.

The light-emitting diodes may not be placed or arranged in a random way since this may not result in a homogenous distribution of light. It is preferred that the arrangement of the light-emitting diodes follow the following rules:
1. Light-emitting diodes having the same colour may not be placed next to each other.
2. The light-emitting diodes shall be placed in concentric circles, which may be centred round the centre of the light source. For an embodiment of the light source, which is not symmetrical formed, the concentric circles can also be arranged as smaller units.
3. As an alternative to the concentric circles, the light-emitting diodes may also be placed in a polygon structure, which is centred round the centre of the light source. For an embodiment of the light source, which is not symmetrical formed, the polygon structure can also be arranged as smaller units.

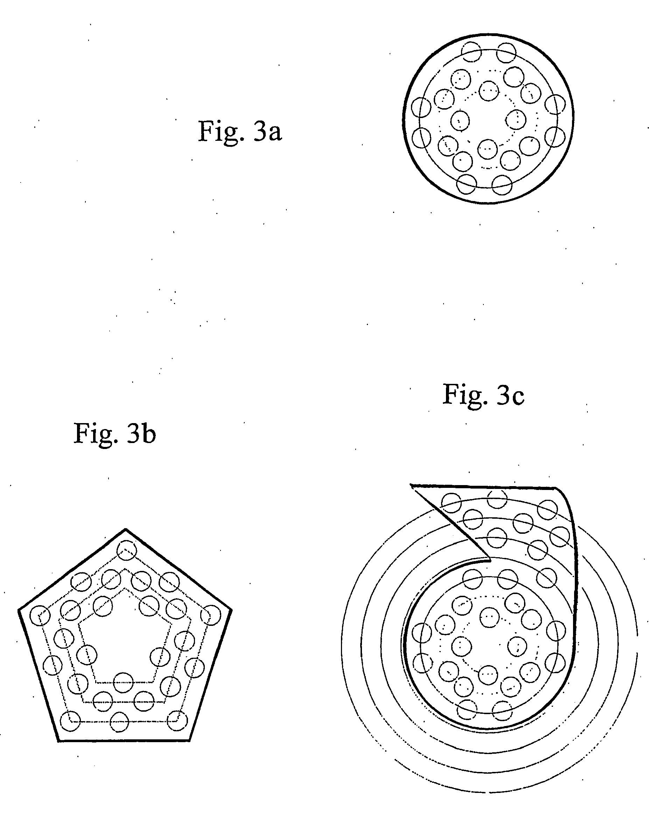

Figs. 3a, 3b, 3c illustrates alternatives of arrangements of light emitting diodes according to embodiments of the present invention. In Fig. 3a, the diodes are arranged following concentric circles, in Fig. 3b the diodes are arranged in a polygon structure, which is centred round the centre of the light source, while in Fig. 3c is shown a light source, which is not symmetrical formed, but where the diodes are arranged on concentric circle lines.

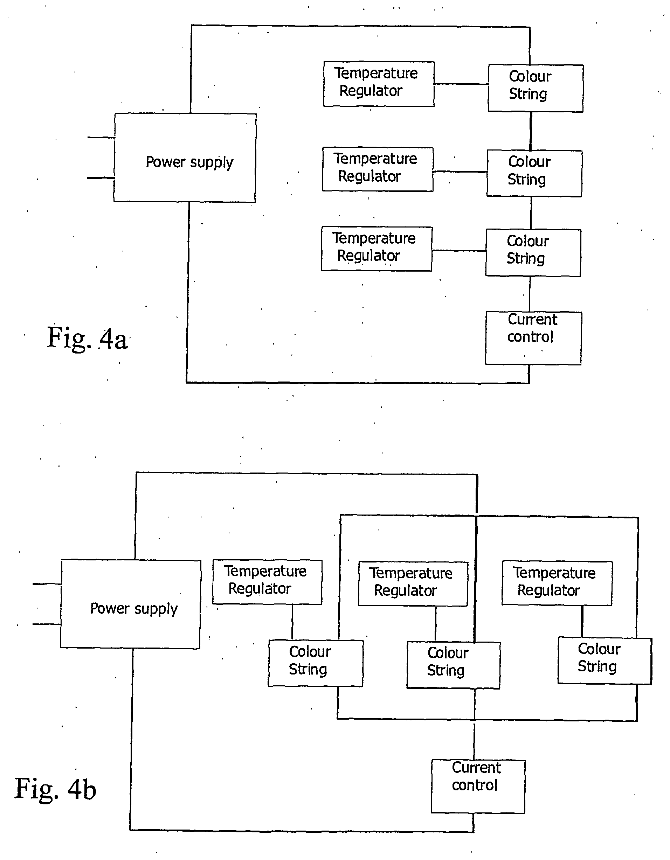

Figs. 4a, 4b are block diagrams showing the arrangement of components of two lighting bodies or sources of light according to the invention having an AC to DC power supply. In Fig. 4a, the light-emitting diodes are put together in one serial diode string comprising 3 colour strings of serial connected light-emitting diodes. Here, one colour string comprises diodes of one colour only, and by having 3 colour strings, the diode string may comprise light-emitting diodes of 3 different colours. Between the diode string and the AC to DC power supply is connected a current controlling or limiting circuit. Furthermore, each of the 3 colour strings is connected to a temperature regulating circuit or a temperature compensating circuit for controlling the current in the corresponding colour string as a function of diode temperature.

In Fig. 4b, the light-emitting diodes are arranged in 3 serial diode strings, and these 3 diode strings are connected in parallel with the AC to DC power supply, with a current controlling or limiting circuit inserted in series with the power supply. Here, each of the 3 diode strings comprises one colour string of serial connected light-emitting diodes. Also here, by having 3 colour strings, the diode strings may comprise light-emitting diodes of 3 different colours. Again, each of the 3 colour strings is connected to a temperature regulating circuit or a temperature compensating circuit for controlling the current in the corresponding colour string as a function of diode temperature.

In a preferred embodiment each diode string may consist of a number of light-emitting diodes in each of the three colours red, green and blue. It is also possible to put together the light-emitting diodes in strings of the same colour. The number of light-emitting diodes in each colour in a diode string depends on:
1. The total number of light-emitting diodes in the unit.
2. The employed power supply.
3. The voltage for which the unit is produced.

In a preferred embodiment for 12V and 220V/115V, the number of light-emitting diodes will be 30. For other embodiments there may be more or less light-emitting diodes, depending on the desired amount of light or special wishes to the geometry.

The light-emitting diodes are divided in strings so that each string is supplied with a voltage corresponding to the total voltage drop across the diodes, when the voltage drop is at a maximum, but the strings are not necessarily supplied with the same current.

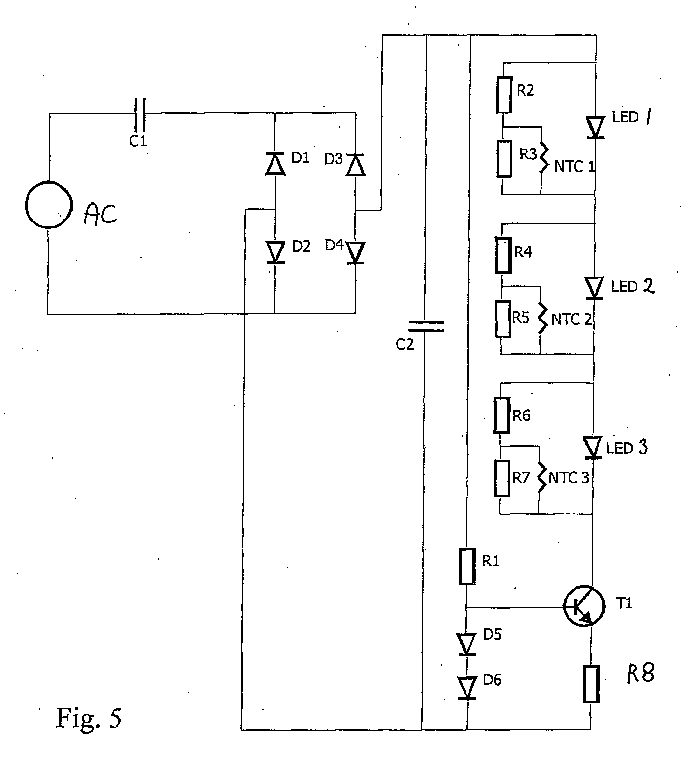

Fig. 5 is a detailed diagram showing the components of the block diagram of Fig. 4a. Here, the AC to DC power supply is a reactance divider, which is used in connection with the supply of the light-emitting diodes of the light source from 220V/115V AC. The reactance divider may be almost loss-free. The AC to DC converter of Fig. 5 has first and second AC-supply terminals and a non-isolated capacitor fed diode rectifier with a first capacitor C1 being coupled between the first AC terminal and a first diode rectifier input and with a second input of the diode rectifier being supplied from the second AC terminal. The diode rectifier is a full wave bridge rectifier having rectifying diodes D1, D2, D3 and D4. The diode rectifier has first and second diode rectifier outputs with a second capacitor C2 being coupled between said first and second diode rectifier outputs. The value of the first capacitor C1 may be in the range 100nF to 1µF and the capacitor C1 may be of the metal film type, preferably having an X2 mark.

The capacitor C2 may serve for smoothening the voltage of the output of the diode rectifier.

In Fig. 5 the current controlling or limiting circuit comprises a transistor T1, resistors R1 and R8 and diodes D5 and D6. The limiting value of the current by which the controlling circuit will be limiting the current may be determined by selecting the value of R8. Usually, the current limiting function will only be active for high input voltages being around twice the normal input voltage.

For the circuit of Fig. 5, there is one diode string comprising 3 colour strings, being named LED1, LED 2 and LED 3, respectively. Here, each colour string is illustrated by one LED. For the first colour string, there is a first temperature compensating circuit having resistors R1, R2 and an NTC resistor NTC1. The value of NTC1 is reduced with increasing temperature, whereby the current through the NTC resistor is increased with increased temperature, and the current through the series connected diodes of the corresponding colour string is reduced.

For the second colour string LED2, the components of the temperature compensating circuit are named R4, R5 and NTC2, and for the third colour string LED3, the components of the temperature compensating circuit are named R6, R7 and NTC3, respectively.

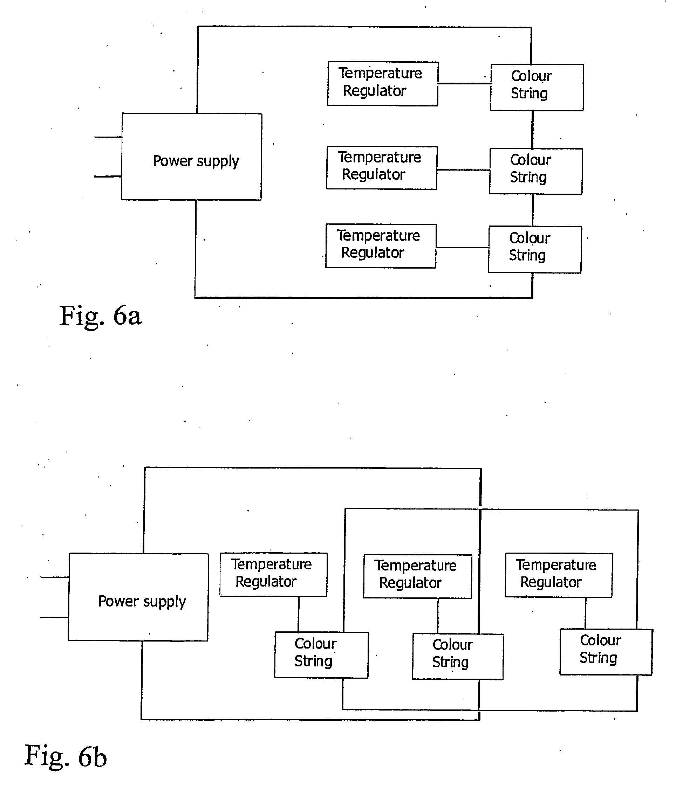

Figs. 6a and 6b are block diagrams showing the arrangement of components of two lighting bodies or sources of light according to the invention having a DC to DC power supply. The block diagram of Fig. 6a corresponds to the diagram of Fig. 4a, with the exception that there is no current control or limiting circuit in Fig. 6a. Similarly, the block diagram of Fig. 6b corresponds to the diagram of Fig. 4b, with the exception that there is no current control or limiting circuit in Fig. 6b.

Thus, in Fig. 6a, the light-emitting diodes are put together in one serial diode string comprising 3 colour strings of serial connected light-emitting diodes, and in Fig. 6b, the light-emitting diodes are arranged in 3 serial diode strings, each of which is a colour string, and these 3 diode strings are connected in parallel with the DC to DC power supply. The temperature regulating circuits or temperature compensating circuits are preferably the same as shown in Fig. 5 and used for controlling the current in the corresponding colour string as a function of diode temperature.

The lighting body or source of light of the present invention may be supplied with the necessary electrical energy by a power supply, which can be either separate or built together with the light source. However, for DC to DC power supplies of Fig. 6a and 6b, the power supply is built together with the light source. Here, the DC to DC power supply may be used in connection with 12V AC, 6V DC, 12V DC or 24V DC supplies, which may be used in cars, boats, caravans, halogen spotlights and so on.

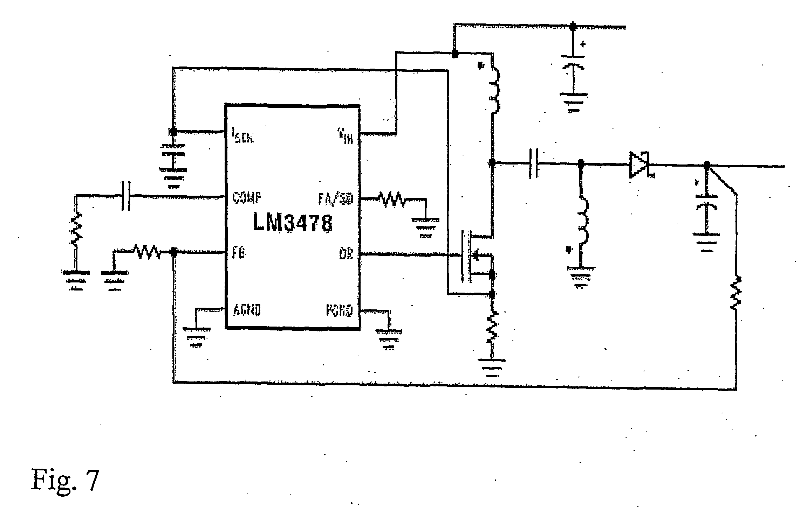

The DC to DC power supply to be used in the lighting bodies if Fig. 6a and 6b may be a boost converter built on the LM 3478 circuit from National Semiconductor, as illustrated in Fig. 7. Here, the DC input voltage may be in the range of 5-40 V.

The DC to DC power supply may be adapted for the voltage and the current to be supplied to the strings of light-emitting diodes.

Due to the use of light-emitting diodes the light source 10 may have a very long lifetime, which is typically 100.000 hours by continuous use assuming that the operating temperature is below 40 °C.

The light source 10 can be formed in a countless number of ways without having the basic functionality changed. By the basic functionality in this connection is meant the possibility for emitting coloured light. The light source 10 may then be formed as a star, a circle, a cross or other two-dimensional figures.

The light source 10 can be cast into heat resistant and watertight materials, which makes it possible to wash the light source by use of a normal automatic dishwasher or by use of machines for sterilizing at temperatures up to 85 °C.

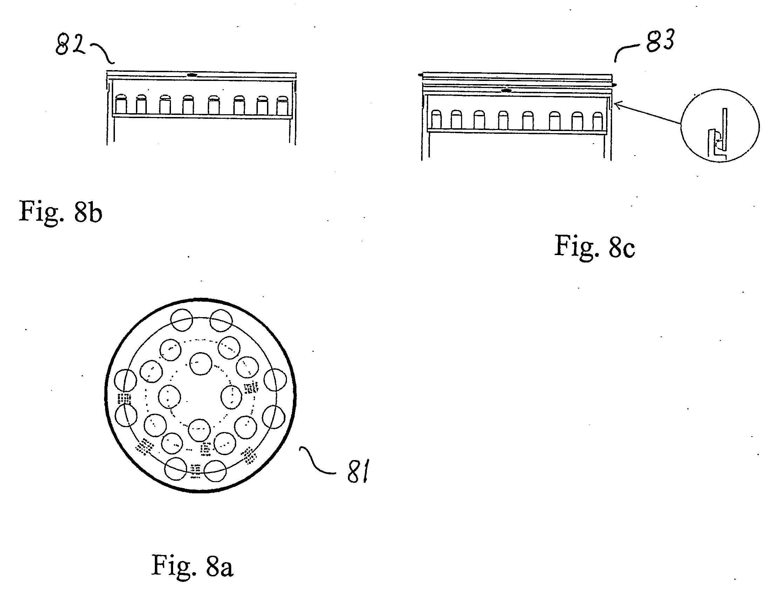

Figs. 8a, 8b, 8c illustrates mechanical colour shade regulators according to embodiments of the present invention. Fig. 8a shows a regulator 81 from the front side of the light source 10. The regulator 81 may comprise a single regulating plate as shown in Fig. 8b, which is a side view of a light source 10 with a single regulating plate 82, or the regulator 81 may comprise two or three regulating plates, as illustrated in Fig. 8c, which is a side view of a light source 10 having a regulator 83 with three regulating plates.

When the mechanical colour shade regulator comprises a single regulating plate, the regulating plate may be arranged so that it can rotate or slide between two or more positions to thereby cover different parts of the LEDs. When the mechanical colour shade regulator comprises two, three or more regulating plates arranged below each other, the regulating plates should be arranged so that they can rotate or slide independently of each other between two or more positions, to thereby cover different parts of the LEDs.

The regulating plate of the mechanical colour shade regulator may be made of a transparent material being covered on the outer side by a raster or screen. Thus, the regulating plate may be made of a glass material or a plastic material, such as plexiglass. The regulating plate may on the outer side be covered by a raster or screen having the form of a lattice pattern or a dot pattern.

It should be understood that the area of the light-emitting diodes being covered by the raster may be varied by rotating or sliding the regulating plate. This may be seen from the front view of Fig. 8a, where the dotted areas show a raster pattern, which more or less may cover the light-emitting diodes, the area of the diodes being covered being determined by the rotating of the regulating plate.

For a regulator comprising two regulating plates, and wherein the lighting part comprises light-emitting diodes of a first and a second colour, the regulating plates may be arranged so that the first plate can rotate or slide to thereby have its raster at least partly covering the light-emitting diodes of the first colour, and so that the second plate can rotate or slide to thereby have its raster at least partly covering the light-emitting diodes of the second colour. When the lighting part further comprises light-emitting diodes of a third colour, and the mechanical colour shade regulator further comprises a third regulating plate, the third regulating plate may be arranged so that it can rotate or slide to thereby have its raster at least partly covering the light-emitting diodes of the third colour.

In a preferred embodiment the regulator 81 consists of a transparent heat resistant materials with a raster or screen arranged in front of the light-emitting diodes. When the raster or screen is arranged on the outer side of the regulator, the heat delivered to the raster or screen pattern may be delivered to the surroundings. In this way the heat is not delivered to the interior of the light source thereby only having a minimum effect of the light-emitting diodes. In a preferred embodiment the raster or screen pattern can be formed as a dot pattern,but it can also be formed as a lattice pattern. The raster or screen pattern may also be formed as a sliding raster or screen going from 0% to 100% coverage. The regulator 81 may be formed so that it can be turned by use of a finger or the like. In this way the raster or screen pattern can be placed above the individual light-emitting diodes and totally or partly remove the contribution of light from one or more of the diodes.

As discussed above, the regulator may also comprise several regulating plates, each of which can be turned in dependency of each other or without being dependent on each other. Likewise, the raster or screen of the individual regulator may be differently formed dependent on the desired effect.

Light-emitting diodes are sensitive to the heat to which they are exposed. If light-emitting diodes get too warm (> 40 °C), then a forced aging occurs. On the other hand, if the temperature is below 40 °C, then the lifetime of the diodes is increased and for strongly reduced temperatures, the efficiency of the individual diode will be increased, temperature < 20 °C.

Since the characteristics of the individual diodes are not alike, then for large changes in the temperature as well as due to normal aging of the diodes, a shift in the mixture of the colours will occur. The time it takes before the change in colour due to ageing becomes visible for the user depends among other things of the heat to which the light-emitting diodes are exposed. This could for example be in connection with high surrounding temperatures. Such a change in colour can easily be regulated for by the used regulator 81.

For the string or wire constructions of Figs. 4 and 6, there may be a built in temperature compensation, which lowers the delivered power in the individual light-emitting diode if the operating temperature is increased due to for example a change in the surrounding temperature.

This compensation takes care of that the mixture of the colours is held rather constant and that the lifetime of the lamp is maintained. For temperatures above 40 °C, the result is a weak decrease in the efficiency of the light emission, for which reason there may be taken care of that the operating temperature is held as low as possible, which may include use of cooling.

Therefore, the regulation primarily may be rendered necessary by the natural ageing of the diodes and by large changes in the surrounding temperatures.

Furthermore, in a preferred embodiment the emission of heat from the light-emitting diodes may be conducted away via the used embedding. The emission of heat may also be conducted away by use of a non-conducting liquid being arranged as a liquid bath in which the light-emitting diodes are placed, and the heat is then conducted away via the outer side of the lamp, which thereby functions as a cooling plate. The outer side may then be formed with or without cooling grooves dependent on the size of the light source and amount of emitted heat.

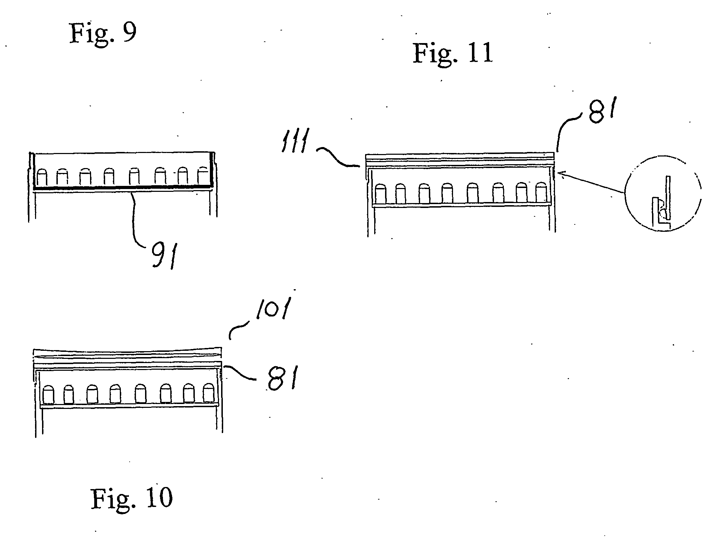

A small amount of light may be emitted from the rear side of the light-emitting diodes. This amount of light may be collected by use of a reflective layer on the printed circuit board on which board the light-emitting diodes are mounted. In this way an increase in the efficiency of the light emission of up to 20% may be obtained. This is illustrated in Fig. 9, which shows the arrangement of a reflector or a reflective layer 91 in a lighting body or source of light 10 according to an embodiment of the present invention,

Fig. 10 shows the arrangement of a colour shade regulator having a single regulating plate 81 and a conventional lens 101 on a lighting body or source of light 10 according to an embodiment of the present invention.

Fig. 11 shows the arrangement of a colour shade regulator having a single regulating plate 81 and a holographic lens 111 on a lighting body or source of light 10 according to an embodiment of the present invention.

## Claims

1. A lighting body or a source of light (10) comprising:
a lighting part (11) with a number of light-emitting diodes (LEDs) (12), and
a power part (13) with a power converter for converting an incoming AC or DC current to a direct current for supply of the LEDs (12), said power converter having first and
second outputs for the supply of the LEDs (12),
**characterised in that**
the power part (13) comprises a DC to DC converter for converting a low-voltage DC input current into a direct current for supply of the LEDs (12), said DC to DC converter comprising a step-up converter or a boost converter, and/or **characterised in that**
a first number of LEDs are serially connected in a first diode string being supplied from the outputs of the power converter, said first diode string comprising LEDs of two different colours with LEDs of similar colour being serially connected to each other in at least two corresponding colour strings.

2. A lighting body or a source of light (10) according to claim 1, wherein the power part (13) comprises an AC to DC converter for converting a high-voltage AC current into a direct current for supply of the LEDs (12), wherein said AC to DC converter comprises a reactance divider.

3. A lighting body or a source of light (10) according to claims 2, wherein the AC to DC converter comprises first and second AC-supply terminals and a non-isolated capacitor fed diode rectifier with a first capacitor being coupled between the first AC terminal and a first diode rectifier input and with a second input of the diode rectifier being supplied from the second AC terminal.

4. A lighting body or a source of light (10) according to claim 3, wherein the diode rectifier is a full wave bridge rectifier.

5. A lighting body or a source of light (10) according to claim 3 or 4, wherein the diode rectifier has first and second diode rectifier outputs with a second capacitor being coupled between said first and second diode rectifier outputs.

6. A lighting body or a source of light (10) according to claim 3 or 4, wherein the value of the first capacitor is in the range 100nF to 1µF.

7. A lighting body or a source of light (10) according to claim 5 or 6, wherein the outputs of the AC to DC converter are the first and second diode rectifier outputs.

8. A lighting body or a source of light (10) according to 3-7, wherein a bleed resistor is connected across the first and second AC-supply terminals.

9. A lighting body or a source of light (10) according to any one of the claims 1-8, wherein a current controlling or limiting circuit is inserted between a number of serially connected LEDs and one of the outputs of the power converter.

10. A lighting body or a source of light (10) according to any one of the claims 1-9, wherein the power converter is an AC to DC converter and a first current controlling or limiting circuit is inserted in series between the first diode string and one of the outputs of the AC to DC converter.

11. A lighting body or a source of light (10) according to any one of the claims 1-10, wherein a second number of LEDs are serially connected in a second diode string being supplied from the outputs of the power converter in parallel with the first diode string.

12. A lighting body or a source of light (10) according to any one of the claims 1-11, wherein the power converter is an AC to DC converter and a second current controlling or limiting circuit is inserted in series between the second diode string and one of the outputs of the AC to DC converter.

13. A lighting body or a source of light (10) according to claim 11 or 12, wherein a third number of LEDs (12) are serially connected in a third diode string being supplied from the outputs of the power converter in parallel with the first and second diode strings.

14. A lighting body or a source of light (10) according to claim 13, wherein the power converter is an AC to DC converter and a third current controlling or limiting circuit is inserted in series between the third diode string and one of the outputs of the AC to DC converter.

15. A lighting body or a source of light (10) according to any one of the claims 11-14, wherein for each diode string, the light-emitting diodes of similar colour are serially connected to each other in a colour string.

16. A lighting body or a source of light (10) according to anyone of the claims 1-15, wherein the lighting part comprises light-emitting diodes of three different colours, said different coloured light-emitting diodes being arranged in at least three corresponding colour strings.

17. A lighting body or a source of light (10) according to claim 16, wherein a diode string comprises light-emitting diodes of three different colours, said different coloured light-emitting diodes being arranged in three corresponding colour strings.

18. A lighting body or a source of light (10) according to any one of the claims 1-17, wherein a temperature compensating circuit is connected to a corresponding colour string for controlling the current in the colour string as a function of diode temperature.

19. A lighting body or a source of light (10) according to claim 18, wherein each colour string is connected to a corresponding temperature compensating circuit for controlling the current in the colour string as a function of diode temperature.

20. A lighting body or a source of light (10) according to claim 19, wherein each temperature compensating circuit is adapted to reduce the current in the diodes of the corresponding colour string for increasing temperatures.

21. A lighting body or a source of light (10) according to any one of the claims 18-20. wherein for each temperature compensating circuit, a temperature sensitive element is arranged below a light-emitting diode of the corresponding diode string.

22. A lighting body or a source of light (10) according to any one of the claims 1-21, wherein the power part (13) is an integral part of the lighting body or source of light (10).

23. A lighting body or a source of light (10) according to any one of the claims 1-22, wherein the light emitting diodes (12) are arranged on a substantially plane LED printed circuit board (16) and the power part (13) is arranged on a power supply printed circuit board (17) being placed below the LED printed circuit board (16).

24. A lighting body or a source of light (10) according to any one of the claims 1-23, said lighting body or source of light (10) further comprising a socket (14) with socket connections (15a, 15b) being connected to voltage inputs of the power converter.

25. A lighting body or a source of light (10) according to claim 24, wherein the socket (14) is an Edison screw socket.

26. A lighting body or a source of light (10) according to any one of the preceding claims, said lighting body or source of light (10) further comprising a mechanical colour shade regulator (81).

27. A lighting body or a source of light (10) according to any one of the claims 1-26, wherein the lighting part (11) comprises light-emitting diodes (12) of at least two colours, to thereby obtain a coloured light.

28. A lighting body or a source of light (10) according to any one of the claims 1-27, wherein the lighting part (11) comprises light-emitting diodes (12) of at least three colours.

29. A lighting body or a source of light (10) according to claim 28, wherein the light-emitting diodes (12) comprises red, green and blue light-emitting diodes.

30. A lighting body or a source of light (10) according to claim 29, wherein the red, green and blue light-emitting diodes are arranged so as to obtain white light.

31. A lighting body or a source of light (10) according to any one of the claims 28-30, wherein light-emitting diodes having the same colour are not placed next to each other.

32. A lighting body or a source of light (10) according to claim 29, wherein the red, green and blue light-emitting diodes are arranged so as to obtain coloured light.

33. A lighting body or a source of light (10) according to claim 32, wherein at least some light-emitting diodes having the same colour are placed next to each other.

34. A lighting body or a source of light (10) according to any one of the claims 1-33, wherein the light-emitting diodes of the lighting part are placed or arranged in concentric circles or in polygons.

35. A lighting body or a source of light (10) according to claim 34, wherein the concentric circles or polygons are arranged having their centre in the centre of the light source.

36. A lighting body or a source of light (10) according to any one of the claims 1-35, wherein the light source (10) is cast into a watertight and/or heat-resistant material.

37. A lighting body or a source of light (10) according to 36, wherein the casting material is heat-conducting so that the heat is conducted away from the light-emitting diodes.

38. A lighting body or a source of light (10) according to any one of the claims 1-35. wherein the light-emitting diodes (12) are arranged in a non-conducting liquid bath for conducting away the heat from the light-emitting diodes.

39. A lighting body or a source of light (10) according to any one of the claims 1-38, wherein a reflective layer (91) is arranged beneath the light-emitting diodes (12) for reflecting forwards light being emitted to the rear by the light-emitting diodes.

40. A lighting body or a source of light (10) according to any one of the claims 1-39, further comprising one or more optical lenses (101) for focusing the light emitted from the light-emitting diodes.

41. A lighting body or a source of light (10) according to any one of the claims 1-40, wherein a reflector or a shield is arranged along the edge of the lighting part.

42. A lighting body or a source of light (10) according to claim 41, wherein the edge reflector or shield is arranged so as to form a shield for the outer edge of the field of emitted light.

## Patentansprüche

1. Beleuchtungskörper oder Lichtquelle (10), der bzw. die umfasst:
einen Beleuchtungsteil (11) mit einer Anzahl von Leuchtdioden (LEDs) (12), und
einen Stromteil (13) mit einem Stromumrichter zum Umrichten eines eingehenden AC- oder DC-Stroms in einen Gleichstrom zur Versorgung der LEDs (12), wobei der Stromumrichter einen ersten und
einen zweiten Ausgang für die Versorgung der LEDs (12) aufweist,
**dadurch gekennzeichnet, dass**
der Stromteil (13) einen DC/DC-Umrichter zum Umrichten eines Niederspannungs-DC-Eingangsstroms in einen Gleichstrom zur Versorgung der LEDs (12) umfasst, wobei der DC/DC-Umrichter einen Aufwärtsumrichter oder einen Hochsetzsteller umfasst,
und/oder **dadurch gekennzeichnet, dass**
eine erste Anzahl von LEDs in einer ersten Diodenkette, die von den Ausgängen des Stromumrichters versorgt wird, in Reihe geschaltet sind, wobei die erste Diodenkette LEDs von zwei verschiedenen Farben umfasst, wobei LEDs von ähnlicher Farbe in zumindest zwei entsprechenden Farbketten in Reihe miteinander verbunden sind.

2. Beleuchtungskörper oder Lichtquelle (10) nach Anspruch 1, wobei der Stromteil (13) einen AC/DC-Umrichter zum Umrichten eines Hochspannungs-AC-Stroms in einen Gleichstrom zur Versorgung der LEDs (12) umfasst, wobei der AC/DC-Umrichter einen Blindwiderstandsteiler umfasst.

3. Beleuchtungskörper oder Lichtquelle (10) nach Anspruch 2, wobei der AC/DC-Umrichter ein erstes und ein zweites AC-Versorgungsanschlusselement und einen nicht isolierten kondensatorgespeisten Diodengleichrichter umfasst, wobei ein erster Kondensator zwischen das erste AC-Anschlusselement und einen ersten Diodengleichrichtereingang gekoppelt ist und wobei ein zweiter Eingang des Diodengleichrichters von dem zweiten AC-Anschlusselement versorgt wird.

4. Beleuchtungskörper oder Lichtquelle (10) nach Anspruch 3, wobei der Diodengleichrichter ein Vollwellenbrückengleichrichter ist.

5. Beleuchtungskörper oder Lichtquelle (10) nach Anspruch 3 oder 4, wobei der Diodengleichrichter einen ersten und einen zweiten Diodengleichrichterausgang aufweist, wobei ein zweiter Kondensator zwischen den ersten und den zweiten Diodengleichrichterausgang gekoppelt ist.

6. Beleuchtungskörper oder Lichtquelle (10) nach Anspruch 3 oder 4, wobei der Wert des ersten Kondensators in dem Bereich 100 nF bis 1 µF liegt.

7. Beleuchtungskörper oder Lichtquelle (10) nach Anspruch 5 oder 6, wobei die Ausgänge des AC/DC-Umrichters der erste und der zweite Diodengleichrichterausgang sind.

8. Beleuchtungskörper oder Lichtquelle (10) nach einem der Ansprüche 3 bis 7, wobei ein Ableitungswiderstand über das erste und das zweite AC-Versorgungsanschlusselement verbunden ist.

9. Beleuchtungskörper oder Lichtquelle (10) nach einem der Ansprüche 1 bis 8, wobei ein stromsteuernder oder -begrenzender Schaltkreis zwischen einer Anzahl von in Reihe verbundenen LEDs und einem der Ausgänge des Stromumrichters eingesetzt ist.

10. Beleuchtungskörper oder Lichtquelle (10) nach einem der Ansprüche 1 bis 9, wobei der Stromrichter ein AC/DC-Umrichter ist und ein erster stromsteuernder oder -begrenzender Schaltkreis in Reihe zwischen der ersten Diodenkette und einem der Ausgänge des AC/DC-Umrichters eingesetzt ist.

11. Beleuchtungskörper oder Lichtquelle (10) nach einem der Ansprüche 1 bis 10, wobei eine zweite Anzahl von LEDs in einer zweiten Diodenkette, die parallel zu der ersten Diodenkette von den Ausgängen des Stromumrichters versorgt wird, in Reihe geschaltet sind.

12. Beleuchtungskörper oder Lichtquelle (10) nach einem der Ansprüche 1 bis 11, wobei der Stromumrichter ein AC/DC-Umrichter ist und ein zweiter stromsteuernder oder -begrenzender Schaltkreis in Reihe zwischen die zweite Diodenkette und einen der Ausgänge des AC/DC-Umrichters eingefügt ist.

13. Beleuchtungskörper oder Lichtquelle (10) nach Anspruch 11 oder 12, wobei eine dritte Anzahl von LEDs (12) in einer dritten Diodenkette, die parallel zu der ersten und der zweiten Diodenkette von den Ausgängen des Stromumrichters versorgt wird, in Reihe geschaltet sind.

14. Beleuchtungskörper oder Lichtquelle (10) nach Anspruch 13, wobei der Stromumrichter ein AC/DC-Umrichter ist und ein dritter stromsteuernder oder -begrenzender Schaltkreis in Reihe zwischen die dritte Diodenkette und einen der Ausgänge des AC/DC-Umrichters eingefügt ist.

15. Beleuchtungskörper oder Lichtquelle (10) nach einem der Ansprüche 11 bis 14, wobei für jede Diodenkette die Leuchtdioden von ähnlicher Farbe in einer Farbkette in Reihe miteinander verbunden sind.

16. Beleuchtungskörper oder Lichtquelle (10) nach einem der Ansprüche 1 bis 15, wobei der Beleuchtungsteil Leuchtdioden von drei verschiedenen Farben umfasst, wobei die unterschiedlich farbigen Leuchtdioden in zumindest drei entsprechenden Farbketten angeordnet sind.

17. Beleuchtungskörper oder Lichtquelle (10) nach Anspruch 16, wobei eine Diodenkette Leuchtdioden von drei verschiedenen Farben umfasst, wobei die unterschiedlich farbigen Leuchtdioden in drei entsprechenden Farbketten angeordnet sind.

18. Beleuchtungskörper oder Lichtquelle (10) nach einem der Ansprüche 1 bis 17, wobei ein temperaturkompensierender Schaltkreis mit einer entsprechenden Farbkette verbunden ist, um den Strom in der Farbkette als Funktion der Diodentemperatur zu steuern.

19. Beleuchtungskörper oder Lichtquelle (10) nach Anspruch 18, wobei jede Farbkette mit einem entsprechenden temperaturkompensierenden Schaltkreis verbunden ist, um den Strom in der Farbkette als Funktion der Diodentemperatur zu steuern.

20. Beleuchtungskörper oder Lichtquelle (10) nach Anspruch 19, wobei jeder temperaturkompensierende Schaltkreis angepasst ist, um den Strom in den Dioden der entsprechenden Farbkette für ansteigende Temperaturen zu verringern.

21. Beleuchtungskörper oder Lichtquelle (10) nach einem der Ansprüche 18 bis 20, wobei für jeden temperaturkompensierenden Schaltkreis ein temperaturempfindliches Element unterhalb einer Leuchtdiode der entsprechenden Diodenkette angeordnet ist.

22. Beleuchtungskörper oder Lichtquelle (10) nach einem der Ansprüche 1 bis 21, wobei der Stromteil (13) ein integraler Teil des Beleuchtungskörpers oder der Lichtquelle (10) ist.

23. Beleuchtungskörper oder Lichtquelle (10) nach einem der Ansprüche 1 bis 22, wobei die Leuchtdioden (12) an einer im Wesentlichen ebenen LED-Leiterplatte (16) angeordnet sind und der Stromteil (13) an einer Stromversorgungsleiterplatte (17) angeordnet ist, die unterhalb der LED-Leiterplatte (16) platziert ist.

24. Beleuchtungskörper oder Lichtquelle (10) nach einem der Ansprüche 1 bis 23, wobei der Beleuchtungskörper oder die Lichtquelle (10) ferner eine Fassung (14) umfasst, wobei Fassungsanschlüsse (15a, 15b) mit Spannungseingängen des Stromumrichters verbunden sind.

25. Beleuchtungskörper oder Lichtquelle (10) nach Anspruch 24, wobei die Fassung (14) eine Edison-Schraubfassung ist.

26. Beleuchtungskörper oder Lichtquelle (10) nach einem der vorhergehenden Ansprüche, wobei der Beleuchtungskörper oder die Lichtquelle (10) ferner einen mechanischen Farbtonregler (81) umfassen.

27. Beleuchtungskörper oder Lichtquelle (10) nach einem der Ansprüche 1 bis 26, wobei der Beleuchtungsteil (11) Leuchtdioden (12) von zumindest zwei Farben umfasst, um **dadurch** farbiges Licht zu erhalten.

28. Beleuchtungskörper oder Lichtquelle (10) nach einem der Ansprüche 1 bis 27, wobei der Beleuchtungsteil (11) Leuchtdioden (12) von zumindest drei Farben umfasst.

29. Beleuchtungskörper oder Lichtquelle (10) nach Anspruch 28, wobei die Leuchtdioden (12) rote, grüne und blaue Leuchtdioden umfassen.

30. Beleuchtungskörper oder Lichtquelle (10) nach Anspruch 29, wobei die roten, grünen und blauen Leuchtdioden derart angeordnet sind, dass weißes Licht erhalten wird.

31. Beleuchtungskörper oder Lichtquelle (10) nach einem der Ansprüche 28 bis 30, wobei Leuchtdioden, welche die gleiche Farbe aufweisen, nicht nebeneinander platziert sind.

32. Beleuchtungskörper oder Lichtquelle (10) nach Anspruch 29, wobei die roten, grünen und blauen Leuchtdioden derart angeordnet sind, dass farbiges Licht erhalten wird.

33. Beleuchtungskörper oder Lichtquelle (10) nach Anspruch 32, wobei zumindest einige Leuchtdioden, welche die gleiche Farbe aufweisen, nebeneinander platziert sind.

34. Beleuchtungskörper oder Lichtquelle (10) nach einem der Ansprüche 1 bis 33, wobei die Leuchtdioden des Beleuchtungsteils in konzentrischen Kreisen oder in Polygonen platziert oder angeordnet sind.

35. Beleuchtungskörper oder Lichtquelle (10) nach Anspruch 34, wobei die konzentrischen Kreise oder Polygone derart angeordnet sind, dass ihr Mittelpunkt im Mittelpunkt der Lichtquelle liegt.

36. Beleuchtungskörper oder Lichtquelle (10) nach einem der Ansprüche 1 bis 35, wobei die Lichtquelle (10) in ein wasserdichtes und/oder wärmebeständiges Material eingegossen ist.

37. Beleuchtungskörper oder Lichtquelle (10) nach Anspruch 36, wobei das Gießmaterial wärmeleitend ist, so dass die Wärme von den Leuchtdioden weggeleitet wird.

38. Beleuchtungskörper oder Lichtquelle (10) nach einem der Ansprüche 1 bis 35, wobei die Leuchtdioden (12) in einem nichtleitenden Flüssigkeitsbad zum Wegleiten der Wärme von den Leuchtdioden angeordnet sind.

39. Beleuchtungskörper oder Lichtquelle (10) nach einem der Ansprüche 1 bis 38, wobei eine reflektierende Schicht (91) unter den Leuchtdioden (12) angeordnet ist, um Licht, das durch die Leuchtdioden zur Rückseite emittiert wird, nach vorn zu reflektieren.

40. Beleuchtungskörper oder Lichtquelle (10) nach einem der Ansprüche 1 bis 39, der bzw. die eine oder mehrere optische Linsen (101) zum Fokussieren des von den Leuchtdioden emittierten Lichts umfasst.

41. Beleuchtungskörper oder Lichtquelle (10) nach einem der Ansprüche 1 bis 40, wobei ein Reflektor oder eine Abschirmung entlang des Rands des Beleuchtungskörpers angeordnet ist.

42. Beleuchtungskörper oder Lichtquelle (10) nach Anspruch 41, wobei der Randreflektor oder die Randabschirmung derart angeordnet ist, dass eine Abschirmung für den äußeren Rand des Felds von emittiertem Licht gebildet wird.

## Revendications

1. Corps lumineux ou source de lumière (10) comprenant:
une partie lumineuse (11) comportant un certain nombre de diodes luminescentes LED (12), et
une partie de puissance (13) comportant un convertisseur de puissance destiné à convertir un courant alternatif ou un courant continu en un courant continu pour l'alimentation des diodes LED (12), ledit convertisseur d'alimentation présentant des première et deuxième sorties pour l'alimentation des diodes LED (12), **caractérisé en ce que**
la partie de puissance (13) comprend un convertisseur de courant continu en courant continu destiné à convertir un courant continu d'entrée à faible tension en un courant continu pour l'alimentation des diodes LED (12), ledit convertisseur de courant continu en courant continu comprenant un convertisseur élévateur de tension ou un convertisseur amplificateur, et/ou **caractérisé en ce que**
un premier nombre de diodes LED sont connectées en série dans une première chaîne de diodes qui est alimentée depuis les sorties du convertisseur de puissance, ladite première chaîne de diodes comprenant des diodes LED de deux couleurs différentes, les diodes LED de couleur similaire étant connectées en série les une aux autres dans au moins deux chaînes de couleur correspondantes.

2. Corps lumineux ou source de lumière (10) selon la revendication 1, dans lequel la partie de puissance (13) comprend un convertisseur de courant alternatif en courant continu destiné à convertir un courant alternatif à haute tension en un courant continu pour l'alimentation des diodes LED (12), où ledit convertisseur de courant alternatif en courant continu comprend un diviseur de réactance.

3. Corps lumineux ou source de lumière (10) selon la revendication 2, dans lequel le convertisseur de courant alternatif en courant continu comprend des première et deuxième bornes d'alimentation en courant alternatif et un redresseur à diodes alimenté par un condensateur non isolé, un premier condensateur étant couplé entre la première borne de courant alternatif et une première entrée de redresseur à diodes et une deuxième entrée de redresseur à diodes étant alimentée depuis la deuxième borne de courant alternatif.

4. Corps d'éclairage ou source de lumière (10) selon la revendication 3, dans lequel le redresseur à diodes est un redresseur à deux alternances.

5. Corps lumineux ou source de lumière (10) selon les revendications 3 ou 4, dans lequel le redresseur à diodes comporte des première et deuxième sorties de redresseur à diodes, un deuxième condensateur étant couplé entre lesdites première et deuxième sorties de redresseur à diodes.

6. Corps d'éclairage ou source de lumière (10) selon la revendication 3 ou 4, dans lequel la valeur du premier condensateur est dans la plage de 100 nF à 1 µF.

7. Corps lumineux ou source de lumière (10) selon la revendication 5 ou 6, dans lequel les sorties du convertisseur de courant alternatif en courant continu sont les première et deuxième sorties de redresseur à diodes.

8. Corps lumineux ou source de lumière (10) selon les revendications 3 à 7, dans lequel une résistance stabilisatrice est connectée aux bornes des première et deuxième bornes d'alimentation en courant alternatif.

9. Corps lumineux ou source de lumière (10) selon l'une quelconque des revendications 1 à 8, dans lequel un circuit de commande ou de limitation de courant est inséré entre un certain nombre de diodes LED connectées en série et l'une des sorties du convertisseur de puissance.

10. Corps lumineux ou source de lumière (10) selon l'une quelconque des revendications 1 à 9, dans lequel le convertisseur de puissance est un convertisseur de courant alternatif en courant continu et un premier circuit de commande ou de limitation de courant est inséré en série entre la première chaîne de diodes et l'une des sorties du convertisseur de courant alternatif en courant continu.

11. Corps lumineux ou source de lumière (10) selon l'une quelconque des revendications 1 à 10, dans lequel un deuxième nombre de diodes LED sont connectées en série dans une deuxième chaîne de diodes qui est alimentée depuis les sorties du convertisseur de puissance en parallèle avec la première chaîne de diodes.

12. Corps lumineux ou source de lumière (10) selon l'une quelconque des revendications 1 à 11, dans lequel le convertisseur de puissance est le convertisseur de courant alternatif en courant continu et un deuxième circuit de commande ou de limitation de courant est inséré en série entre la deuxième chaîne de diodes et l'une des sorties du convertisseur de courant alternatif en courant continu.

13. Corps lumineux ou source de lumière (10) selon la revendication 11 ou la revendication 12, dans lequel un troisième nombre de diodes LED (12) sont connectées en série dans une troisième chaîne de diodes qui est alimentée depuis les sorties du convertisseur de puissance en parallèle avec les première et deuxième chaînes de diodes.

14. Corps lumineux ou source de lumière (10) selon la revendication 13, dans lequel le convertisseur de puissance est un convertisseur de courant alternatif en courant continu et un troisième circuit de commande ou de limitation de courant est inséré en série entre la troisième chaîne de diodes et l'une des sortie du convertisseur de courant alternatif en courant continu.

15. Corps lumineux ou source de lumière (10) selon l'une quelconque des revendications 11 à 14, dans lequel, pour chaque chaîne de diodes, les diodes luminescentes de couleur similaire sont connectées en série les unes aux autres dans une chaîne de couleur.

16. Corps lumineux ou source de lumière (10) selon l'une quelconque des revendications 1 à 15, dans lequel la partie lumineuse comprend des diodes luminescentes de trois couleurs différentes, lesdites diodes luminescentes colorées différentes étant agencées dans au moins trois chaînes de couleur correspondantes.

17. Corps lumineux ou source de lumière (10) selon la revendication 16, dans lequel une chaîne de diodes comprend des diodes luminescentes de trois couleurs différentes, lesdites diodes luminescentes colorées différentes étant agencées dans trois chaînes de couleur correspondantes.

18. Corps lumineux ou source de lumière (10) selon l'une quelconque des revendications 1 à 17, dans lequel un circuit de compensation de température est connecté à une chaîne de couleur correspondante pour commander le courant dans la chaîne de couleur en fonction de la température des diodes.

19. Corps lumineux ou source de lumière (10) selon la revendication 18, dans lequel chaque chaîne de couleur est connectée à un circuit de compensation de température correspondant pour commander le courant dans la chaîne de couleur en fonction de la température des diodes.

20. Corps lumineux ou source de lumière (10) selon la revendication 19, dans lequel chaque circuit de compensation de température est conçu pour réduire le courant dans les diodes de la chaîne de couleur correspondante pour des températures croissantes.

21. Corps lumineux ou source de lumière (10) selon l'une quelconque des revendications 18 à 20, dans lequel, pour chaque circuit de compensation de température, un élément sensible à la température est agencé au-dessous d'une diode luminescente de la chaîne de diodes correspondante.

22. Corps lumineux ou source de lumière (10) selon l'une quelconque des revendications 1 à 21, dans lequel la partie de puissance (13) est une partie intégrante du corps lumineux ou de la source de lumière (10).

23. corps lumineux ou source de lumière (10) selon l'une quelconque des revendications 1 à 22, dans lequel les diodes luminescentes (12) sont agencées sur une carte à circuit imprimé de diodes LED pratiquement plane (16), et la partie de puissance (13) est agencée sur une carte à circuit imprimé d'alimentation électrique (17) qui est placée au-dessous de la carte à circuit imprimé de diodes (16).

24. Corps lumineux ou source de lumière (10) selon l'une quelconque des revendications 1 à 23, ledit corps lumineux ou ladite source de lumière (10) comprenant en outre une douille (14) comportant des connexions de douille (15a, 15b) qui sont connectées aux entrées de tension du convertisseur de puissance.

25. Corps lumineux ou source de lumière (10) selon la revendication 24, dans lequel 1a douille (14) est une douille à vis d'Edison.

26. Corps lumineux ou source de lumière (10) selon l'une quelconque des revendications précédentes, ledit corps lumineux ou ladite source de lumière (10) comprenant en outre un régulateur de teinte de couleur mécanique (81).

27. Corps d'éclairage ou source de lumière (10) selon l'une quelconque des revendications 1 à 26, dans lequel la partie lumineuse (11) comprend des diodes luminescentes (12) d'au moins deux couleurs, afin d'obtenir ainsi une lumière colorée.

28. Corps lumineux ou source de lumière (10) selon l'une quelconque des revendications 1 à 27, dans lequel la partie lumineuse (11) comprend des diodes luminescentes (12) d'au moins trois couleurs.

29. Corps lumineux ou source de lumière (10) selon la revendication 28, dans lequel les diodes luminescentes (12) comprennent des diodes luminescentes de lumière rouge, verte et bleue.

30. Corps lumineux ou source de lumière (10) selon la revendication 29, dans lequel les diodes luminescentes de lumière rouge, verte et bleue sont agencées de manière à obtenir une lumière blanche.

31. Corps lumineux ou source de lumière (10) selon l'une quelconque des revendications 28 à 30, dans lequel des diodes luminescentes ayant la même couleur ne sont pas placées les unes à côté des autres.

32. Corps lumineux ou source de lumière (10) selon la revendication 29, dans lequel les diodes luminescentes de lumière rouge, verte, et bleue sont agencées de manière à obtenir une lumière colorée.

33. Corps lumineux ou source de lumière (10) selon la revendication 32, dans lequel au moins certaines diodes luminescentes ayant la même couleur sont placées les unes à côté des autres.

34. Corps lumineux ou source de lumière (10) selon l'une quelconque des revendications 1 à 33, dans lequel les diodes luminescentes de la partie lumineuse sont placées ou agencées en cercles concentriques ou en polygones.

35. Corps lumineux ou source de lumière (10) selon la revendication 34, dans lequel les cercles concentriques ou les polygones sont agencés en ayant leurs centres au centre de la source de lumière.

36. Corps lumineux ou source de lumière (10) selon l'une quelconque des revendications 1 à 35, dans lequel la source de lumière (10) est moulée dans un matériau étanche à l'eau et/ou résistant à la chaleur.

37. Corps lumineux ou source de lumière (10) selon la revendication 36, dans lequel le matériau de moulage est conducteur de la chaleur de sorte que la chaleur soit évacuée depuis les diodes luminescentes.

38. Corps lumineux ou source de lumière (10) selon l'une quelconque des revendications 1 à 35, dans lequel les diodes luminescentes (12) sont disposées dans un bain de liquide non-conducteur destiné à évacuer la chaleur des diodes luminescentes.

39. Corps lumineux ou source de lumière (10) selon l'une quelconque des revendications 1 à 38, dans lequel une couche réfléchissante (91) est disposée au-dessous des diodes luminescentes (12) pour réfléchir vers l'avant la lumière qui est émise vers l'arrière par les diodes luminescentes.

40. Corps lumineux ou source de lumière (10) selon l'une quelconque des revendications 1 à 39, comprenant en outre une ou plusieurs lentilles optiques (101) destinées à focaliser la lumière émise depuis les diodes luminescentes.

41. Corps lumineux ou source de lumière (10) selon l'une quelconque des revendications 1 à 40, dans lequel un réflecteur ou un masque est agencé le long du bord de la partie lumineuse.

42. Corps lumineux ou source de lumière (10) selon la revendication 41, dans lequel le réflecteur ou masque de bord est agencé de manière à former un masque pour le bord extérieur du champ de lumière émise.
